# EUROPEAN PATENT SPECIFICATION

(11) **EP 4 119 360 B1**
(45) Date of publication and mention of the grant of the patent: **03.07.2024**
(21) Application number: 21767689.9
(22) Date of filing: 10.03.2021
(51) Int. Cl.: B60C 9/22, B60C 1/00, B60C 9/00, D06M 13/395, D06M 15/41, D06M 15/693, B60C 9/20

(54) **TIRE**
REIFEN
PNEU

(30) Priority: 11.03.2020 JP 2020042215
(43) Date of publication of application: 18.01.2023
(73) Proprietor: BRIDGESTONE CORPORATION, Chuo-ku Tokyo 104-8340 (JP)
(72) Inventor: KAWASHIMA, Keisuke, Tokyo 104-8340 (JP)
(74) Representative: Marks & Clerk LLP
(86) International application number: PCT/JP2021/009654
(87) International publication number: WO 2021/182543

(56) References cited:
- JP-A- S6 411 825
- JP-A- H06 344 721
- JP-A- H07 215 010
- JP-A- 2000 203 212
- JP-A- 2001 322 405
- JP-A- 2002 370 507
- JP-A- 2008 273 454
- JP-A- 2009 102 019
- JP-A- 2009 161 872
- JP-A- 2009 174 105
- JP-A- 2009 174 105
- JP-A- 2010 189 492
- JP-A- 2014 525 973
- JP-A- 2014 528 970
- JP-A- 2016 528 337
- US-A1- 2014 235 125
- US-A1- 2016 251 550
- US-A1- 2019 119 535

## Description

### TECHNICAL FIELD

The invention relates to a tire.

### BACKGROUND

In recent years, adhesive compositions not containing resorcinol and formalin have been used in tires out of consideration for the environmental impact. For example, see Patent Literature (PTL) 1.

### CITATION LIST

### Patent Literature

PTL 1: JP 2010-255153 A
PTL 2: JP 2009-102019 A discloses a pneumatic tire comprising a main belt 1 consisting of at least two cord layers 2, 3 and at least one cap layer 4. A width central part 5a of the cap layer 4 employing a nylon cord having a predetermined twist and fineness as a reinforcing element. The tensile modulus of elasticity in the tire circumferential direction per unit width is set at 17 GPa/cm or less. In a width end 5b of the cap layer 4, the tensile modulus of elasticity in the tire circumferential direction per unit width is set at 35 GPa/cm or more, and the width W1 is set to 8-24 mm.
PTL 3: US 2014/235125 A1 discloses an aqueous adhesive composition including: a phenol/aldehyde resin; and an unsaturated elastomer latex. The phenol/aldehyde resin is based on at least: an aromatic polyaldehyde bearing at least two aldehyde functional groups and including at least one aromatic nucleus; and phloroglucinol. The adhesive composition is useable to make a textile material adhere to a crosslinkable rubber composition, and may be used as an advantageous alternative to a formaldehyde-based RFL adhesive.
PTL 4: US 2016/251550 A1 discloses an aqueous adhesive composition comprising an unsaturated elastomer latex and a phenol/aldehyde resin based on an aldehyde of formula (I): in which X comprises N, S or O and R represents -CHO, and based on a polyphenol comprising one or more aromatic nucleus/nuclei. When there is just one aromatic nucleus, the latter bears two or three hydroxyl functional groups in the meta position with respect to each other, the remainder of the aromatic nucleus being unsubstituted. When there are several aromatic nuclei, at least two of them each bear two or three hydroxyl functional groups in the meta position with respect to each other, the two positions ortho to at least one of these hydroxyl functional groups being unsubstituted.
PTL 5: JP 2009-174105 A discloses a method for producing the adhesive composition for organic fiber cords and is characterized in that, after the aging of a liquid mixture containing (A) a resorcin and/or a resorcin-formaldehyde resin, (B) an initial condensation product of formaldehyde and a compound other than resorcin which forms a thermosetting resin when reacted with formaldehyde, (C) a latex and (D) a catalyst; (E) an aqueous isocyanate solution and/or an epoxy compound is added to the aged liquid.
PTL 6: US 2019/119535 A1 discloses an aqueous adhesive composition comprising A) a thermosetting resin and B) an unsaturated elastomer latex. The thermosetting resin is based on: at least one aromatic compound bearing at least two functions, one of these functions being a hydroxymethyl function and the other being an aldehyde function or a hydroxymethyl function, the aromatic compound comprising at least one aromatic ring; and at least aromatic polyphenol comprising at least one aromatic ring bearing at least two hydroxyl functions in the meta position relative to one another, the two positions ortho to at least one of the hydroxyl functions being unsubstituted; and/or at least one aromatic monophenol comprising at least one six-membered aromatic ring bearing a single hydroxyl function, the two positions ortho to the hydroxyl function being unsubstituted, or at least one position ortho to and the position para to the hydroxyl function being unsubstituted.

### SUMMARY

### (Technical Problem)

On the other hand, demand still exists for further improvement of tire performance, such as high-speed durability and straight-line stability. Therefore, there is room for further improvement in tire performance even in tires for which the environmental impact is taken into consideration, such as the tire disclosed in PTL 1.

In view of these circumstances, it is an aim of the invention to provide a tire with both reduced environmental impact and improved tire performance.

### (Solution to Problem)

A tire includes a carcass extending toroidally between a pair of bead portions; a belt layer provided on a tire radial outer side of a crown portion of the carcass; and a belt reinforcement layer provided on the tire radial outer side of the belt layer, wherein the tire includes an organic fiber cord coated with an adhesive composition that includes polyphenols and aldehydes, and when a tire widthwise region centered on a tire equatorial plane and having a width in a tire width direction of 2/3 of the length between ground contact edges is a center region, and tire widthwise regions between the ground contact edges and tire widthwise outer sides of the center region are shoulder regions, a tensile elastic modulus of the belt reinforcement layer in the center region is smaller than the tensile elastic modulus of the belt reinforcement layer in the shoulder regions.

### (Advantageous Effect)

A tire with both reduced environmental impact and improved tire performance can be provided.

### BRIEF DESCRIPTION OF THE DRAWINGS

In the accompanying drawings:

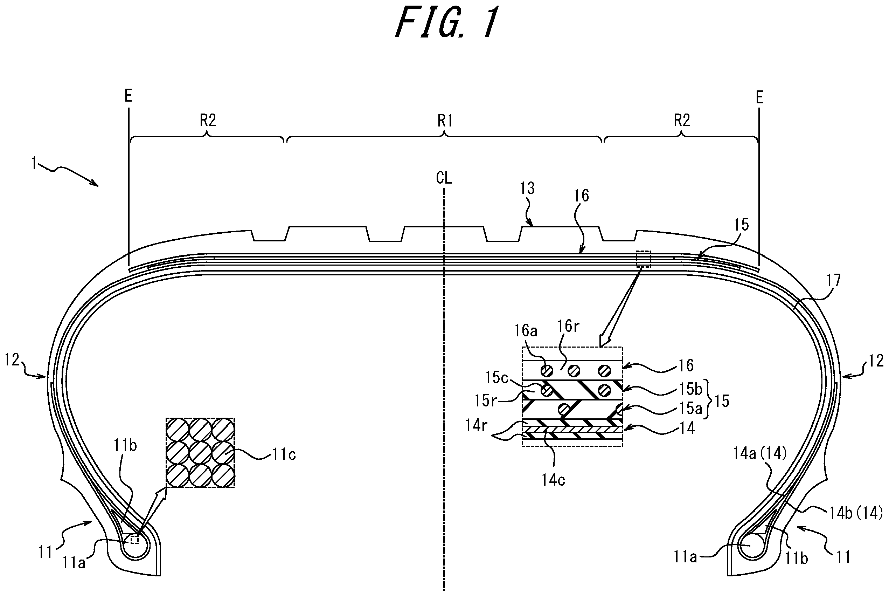

FIG. 1 is a cross-sectional view in the tire width direction of a tire according to an embodiment of the invention.

### DETAILED DESCRIPTION

A tire according to an embodiment of the invention is described below with reference to the drawings. Members and components that are common across drawings are labeled with the same reference signs.

Unless otherwise specified, the positional relationships and the like of elements are assumed below to be measured in a reference state in which the tire is mounted on the rim, which is an applicable rim, of a wheel and filled to a prescribed internal pressure, with no load applied. The width in the tire width direction of the contact patch in contact with the road surface when the tire is mounted on the rim, which is an applicable rim, of the wheel and filled to the prescribed internal pressure, with the maximum load applied, is referred to as the ground contact width of the tire, and the edges in the tire width direction of the contact patch are referred to as the ground contact edges. The tire is described below as being filled with air in the inner cavity and being mounted on a vehicle such as an automobile.

In the present specification, the "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. In the case of a size not listed in these industrial standards, the "applicable rim" refers to a rim whose width corresponds to the bead width of the tire. The "applicable rim" includes sizes that could be included in the future in the above-described industrial standards, in addition to current sizes. Examples of the "sizes that could be described in the future" include the sizes described under "FUTURE DEVELOPMENTS" in the ETRTO STANDARDS MANUAL 2013.

In the present specification, the "prescribed internal pressure" refers to the air pressure (maximum air pressure) corresponding to the maximum load capability of a single wheel for the applicable size/ply rating in industrial standards, such as the aforementioned JATMA YEAR BOOK. In the case of a size not described in the aforementioned industrial standards, the "prescribed internal pressure" refers to the air pressure (maximum air pressure) corresponding to the maximum load capability prescribed for each vehicle on which the tire is mounted. In the present specification, the "maximum load" refers to the load corresponding to the maximum load capability for a tire of the applicable size described in the aforementioned industrial standards. In the case of a size not described in the aforementioned industrial standards, the "maximum load" refers to the load corresponding to the maximum load capability prescribed for each vehicle on which the tire is mounted.

FIG. 1 is a cross-sectional view, in the tire width direction, of a tire 1 according to the present embodiment cut along the tire width direction. In the present description, the tire width direction refers to a direction parallel to the axis of rotation of the tire 1. The tire radial direction refers to a direction orthogonal to the axis of rotation of the tire 1. The tire circumferential direction refers to the direction of rotation of the tire about the rotation axis of the tire 1. In the present embodiment, the tire 1 is described as having a symmetrical configuration with respect to the tire equatorial plane CL. However, the tire 1 may have an asymmetrical configuration with respect to the tire equatorial plane CL.

In the present description, the side closer to the axis of rotation of the tire 1 along the tire radial direction is referred to as the "tire radial inner side", and the side farther from the axis of rotation of the tire 1 along the tire radial direction is referred to as the "tire radial outer side". The side closer to the tire equatorial plane CL along the tire width direction is referred to as the "tire widthwise inner side", and the side farther from the tire equatorial plane CL along the tire width direction is referred to as the "tire widthwise outer side".

As illustrated in FIG. 1, the tire 1 has a pair of bead portions 11, a pair of sidewall portions 12, and a tread portion 13. The sidewall portions 12 extend between the tread portion 13 and the bead portions 11. The sidewall portions 12 are positioned on the tire radial outer side of the bead portions 11.

In the present description, the tread portion 13 has a tread surface that comes into contact with the road surface. In the contact patch of the tread surface of the tread portion 13, the tire widthwise region centered on the tire equatorial plane CL and having a width in the tire width direction of 2/3 of the length between the ground contact edges E is referred to as a center region R1, and tire widthwise regions between the ground contact edges E and the tire widthwise outer sides of the center region R1 are referred to as shoulder regions R2.

The two bead portions 11 each include a bead core 11a and a bead filler 11b. As illustrated in the partial enlargement in FIG. 1, the bead core 11a is provided with a plurality of bead wires 11c surrounded by a rubber coating. In the present embodiment, the bead wires 11c are, for example, configured by steel cords. However, the bead wires 11c may also be configured by organic fiber cords coated with an adhesive composition containing polyphenols and aldehydes. The adhesive composition and the organic fiber cords used in the present embodiment are described in detail below. The cords forming the bead wires 11c can, for example, be formed from monofilaments or twisted wires. The bead fillers 11b are formed from rubber or the like and are positioned farther outward in the tire radial direction than the bead cores 11a. In the present embodiment, the thickness of the bead fillers 11b decreases outward in the tire radial direction. However, the tire 1 may be structured without the bead fillers 11b. The bead portion 11 is configured to contact the rim on the inner side in the tire radial direction and the outer side in the tire width direction when the tire 1 is mounted on the rim.

The tire 1 includes a carcass 14. The carcass 14 extends in a toroidal shape between a pair of bead portions (the bead cores 11a in the illustrated example) and forms the framework of the tire. The end sides of the carcass 14 are engaged with the bead cores 11a. Specifically, the carcass 14 has a carcass body portion 14a disposed between the bead cores 11a and carcass folded-up portions 14b that are folded up from the tire widthwise inner side towards the tire widthwise outer side around the bead cores 11a. The length of the carcass folded-up portion 14b can be freely set. The carcass 14 can have a structure without the carcass folded-up portions 14b, or a structure in which the carcass folded-up portions 14b are wrapped around the bead cores 11a.

The carcass 14 is configured by one or more carcass layers. In the present embodiment, the carcass 14 is configured by one carcass layer, but the carcass 14 may be configured by two or more carcass layers stacked in the tire radial direction at the tire equatorial plane CL. As illustrated in the partial enlargement in FIG. 1, the carcass layer includes one or more carcass cords 14c and a coating rubber 14r that coats the carcass cords 14c. In the present embodiment, the carcass cords 14c are arranged to extend in the tire width direction in the tread portion 13. That is, in the present embodiment, the carcass 14 has a radial structure. However, the carcass 14 may instead have a bias structure.

The carcass cords 14c that configure the carcass layer of the carcass 14 are organic fiber cords coated with an adhesive composition containing polyphenols and aldehydes. The adhesive composition and the organic fiber cords used in the present embodiment are described in detail below. The carcass cords 14c can, for example, be formed from monofilaments or twisted wires.

The tire 1 has a belt 15 reinforcing the tread portion 13. The belt 15 is disposed on the tire radial outer side of the crown region of the carcass 14. In the present embodiment, the belt 15 is provided in the tread portion 13 so as to cover the carcass 14. However, the belt 15 may be provided across the tread portion 13 and a portion of the sidewall portions 12.

The belt 15 is configured by one or more belt layers stacked in the tire radial direction at the tire equatorial plane CL. In the present embodiment, the belt 15 is configured by two belt layers 15a, 15b stacked in the tire radial direction at the tire equatorial plane CL. However, the belt 15 may be configured by one belt layer or by three or more belt layers.

As illustrated in the partial enlargement in FIG. 1, each of the belt layers 15a, 15b includes one or more belt cords 15c and a coating rubber 15r that coats the belt cords 15c. In the present embodiment, in each of the belt layers 15a, 15b, the plurality of belt cords 15c are arranged to form a predetermined angle with respect to the tire circumferential direction. The belt 15 is an intersecting belt in which the belt cords 15c of the belt layer 15a and the belt cords 15c of the belt layer 15b are stacked so as to intersect across the tire equatorial plane CL.

The belt cords 15c configuring the belt layers 15a, 15b of the belt 15 are configured by steel cords, for example, in the present embodiment. However, the belt cords 15c may also be configured by organic fiber cords coated with an adhesive composition containing polyphenols and aldehydes. The adhesive composition and the organic fiber cords used in the present embodiment are described in detail below. The belt cords 15c can, for example, be formed from monofilaments or twisted wires.

The tire 1 has one or more belt reinforcement layers 16 that reinforce the belt 15. The belt reinforcement layer 16 is disposed on the tire radial outer side of the belt 15. In the present embodiment, the belt reinforcement layer 16 is configured to cover the full width of the belt 15 in the tread portion 13 in the tire width direction. However, the belt reinforcement layer 16 may be provided across the tread portion 13 and a portion of the sidewall portions 12. In the illustrated example, the edges of the belt reinforcement layer 16 in the tire width direction are at substantially the same position in the tire width direction as the ground contact edges E, but the edges can be on the inside or outside in the tire width direction. In the present embodiment, the tire 1 has one belt reinforcement layer 16. However, the tire 1 may have two or more belt reinforcement layers 16 stacked in the tire radial direction at the tire equatorial plane CL.

As illustrated in the partial enlargement in FIG. 1, the belt reinforcement layer 16 includes one or more cords 16a and a coating rubber 16r that covers the cords 16a. In the belt reinforcement layer 16 of the present embodiment, the plurality of cords 16a are arranged in an array substantially parallel to the tire circumferential direction.

The cords 16a that configure the belt reinforcement layer 16 are organic fiber cords coated with an adhesive composition containing polyphenols and aldehydes. The adhesive composition and the organic fiber cords used in the present embodiment are described in detail below. The cords 16a can, for example, be formed from monofilaments or twisted wires.

The tensile elastic modulus of the belt reinforcement layer 16 in the center region R1 is smaller than the tensile elastic modulus of the belt reinforcement layer 16 in the shoulder regions R2.

In the present embodiment, the tensile elastic modulus E1 of the belt reinforcement layer 16 in the center region R1 is not particularly limited but is preferably 0.3 to 10 (GPa/mm), for example. The tensile elastic modulus E2 of the belt reinforcement layer 16 in the shoulder regions R2 is not particularly limited, but within a range larger than the tensile elastic modulus E1, is preferably 0.5 to 13 (GPa/mm), for example. The ratio of the tensile elastic modulus E1 of the belt reinforcement layer 16 in the center region R1 to the tensile elastic modulus E2 of the belt reinforcement layer 16 in the shoulder regions R2 (tensile elastic modulus E1 / tensile elastic modulus E2) may be any appropriate value less than 1. By a reduction in the ratio of the tensile elastic modulus E1 to the tensile elastic modulus E2, the straight-line stability and high-speed durability of the tire 1 improve. On the other hand, an increase in the ratio of the tensile elastic modulus E1 to the tensile elastic modulus E2 improves the fuel efficiency of the tire 1. From the viewpoint of improving the fuel efficiency of the tire 1 in addition to improving the straight-line stability and high-speed durability of the tire 1, the ratio of the tensile elastic modulus E1 to the tensile elastic modulus E2 is between 1/1.5 and 1/5.0, preferably between 1/2.0 and 1/3.0.

The tensile elastic modulus of the belt reinforcement layer 16 is measured, for example, by the following method. First, the belt reinforcement layer is removed from a new, unused pneumatic tire without damaging the cords. At this time, excess rubber adhered to the cords of the belt reinforcement layer is carefully removed with scissors or the like. A tensile load-elongation curve is then drawn by an autograph (Shimadzu Corporation) at room temperature (25°C ± 2°C) in accordance with JIS (L1017). The curve is redrawn as a stress-elongation curve by converting the load axis of the load-elongation curve to a value yielded by dividing by the total dtex number (dtex) of the cords before tension. Subsequently, a tangent is drawn at the 7.94 mN/dtex (0.9 g/d) load point on this curve, and the slope of the tangent is determined. The resulting value (the aforementioned slope) is multiplied by (0.981 × specific gravity of the organic fiber) to obtain the tensile elastic modulus of the cord as referred to herein.

The elastic modulus of a cord pulled out from a freely chosen location in the belt reinforcement layer 16 in the center region R1 is multiplied by the number of cords in the protective layer in the center region R1 and divided by the width of the center region R1. The resulting value is taken as the tensile elastic modulus in the center region R1 (GPa/mm). Similarly, the elastic modulus of a cord pulled out from a freely chosen location in the belt reinforcement layer 16 in the shoulder region R2 is multiplied by the number of cords in the protective layer in the shoulder region R2 and divided by the width of the shoulder region R2. The resulting value is taken as the tensile elastic modulus (GPa/mm).

To make the tensile elastic modulus of the center region R1 of the belt reinforcement layer 16 smaller than the tensile elastic modulus of the shoulder regions R2, the belt reinforcement layer 16 may be configured as follows.

For example, the winding tension of the belt reinforcing layer 16 in the center region R1 may be smaller than the winding tension of the belt reinforcing layer 16 in the shoulder regions R2.

In the present embodiment, the winding tension T1 of the belt reinforcement layer 16 in the center region R1 is not particularly limited but is preferably 3 to 7 N/cord, for example. The winding tension T2 of the belt reinforcement layer 16 in the shoulder regions R2 is not particularly limited, but within a range larger than the winding tension T1, is preferably 10 to 20 N/cord, for example. The ratio of the winding tension T1 of the belt reinforcement layer 16 in the center region R1 to the winding tension T2 of the belt reinforcement layer 16 in the shoulder regions R2 (winding tension T1 / winding tension T2) may be any appropriate value less than 1. By the winding tension of the belt reinforcement layer 16 being smaller in some or all of the center region R1 than in all or some of the shoulder regions R2, the tensile elastic modulus E1 of the belt reinforcement layer 16 in the center region R1 can be made smaller than the tensile elastic modulus E2 of the belt reinforcement layer 16 in the shoulder regions R2.

The winding tension of the belt reinforcement layer 16 is measured by, for example, converting a measurement made with a commercially available tension meter into a number per cord.

The number of cords 16a implanted in the belt reinforcement layer 16 in the center region R1 may be smaller than the number of cords 16a implanted in the belt reinforcement layer 16 in the shoulder regions R2.

In the present embodiment, the number N1 of cords 16a implanted in the belt reinforcement layer 16 in the center region R1 is not particularly limited but is preferably 25 to 50 cords/50 mm, for example. The number N2 of cords 16a implanted in the belt reinforcement layer 16 in the shoulder regions R2 is not particularly limited, but within a range larger than the number N1 of cords, is preferably 50 to 100 cords/50 mm, for example. The ratio of the number N1 of cords 16a implanted in the belt reinforcement layer 16 in the center region R1 to the number N2 of cords 16a implanted in the belt reinforcement layer 16 in the shoulder regions R2 (number N1 of cords / number N2 of cords) may be any appropriate value less than 1. The ratio of the number N1 of cords to the number N2 of cords is, for example, preferably 0.3 to 0.8, more preferably 0.5 to 0.6. By the number of cords 16a of the belt reinforcement layer 16 being smaller in some or all of the center region R1 than in all or some of the shoulder regions R2, the tensile elastic modulus E1 of the belt reinforcement layer 16 in the center region R1 can be made smaller than the tensile elastic modulus E2 of the belt reinforcement layer 16 in the shoulder regions R2.

The thermal shrinkage of the cords 16a in the belt reinforcement layer 16 in the center region R1 may be smaller than the thermal shrinkage of the cords 16a in the belt reinforcement layer 16 in the shoulder regions R2.

In the present embodiment, the thermal shrinkage H1 of the cords 16a of the belt reinforcement layer 16 in the center region R1 is not particularly limited but is preferably 2% to 5%, for example. The thermal shrinkage H2 of the cords 16a of the belt reinforcement layer 16 in the shoulder regions R2 is not particularly limited, but within a range larger than the thermal shrinkage H1, is preferably 3% to 8%, for example. The ratio of the thermal shrinkage H1 of the cords 16a in the belt reinforcement layer 16 in the center region R1 to the thermal shrinkage H2 of the cords 16a in the belt reinforcement layer 16 in the shoulder regions R2 (thermal shrinkage H1 / thermal shrinkage H2) may be any appropriate value less than 1. The ratio of the thermal shrinkage H1 to the thermal shrinkage H2 is, for example, preferably 0.5 to 0.8. By the thermal shrinkage of the cords 16a of the belt reinforcement layer 16 being smaller in some or all of the center region R1 than in all or some of the shoulder regions R2, the tensile elastic modulus E1 of the belt reinforcement layer 16 in the center region R1 can be made smaller than the tensile elastic modulus E2 of the belt reinforcement layer 16 in the shoulder regions R2.

The thermal shrinkage of the cords 16a is determined by, for example, taking a dip roll of cords 16a after dip treatment, and in accordance with JIS L1017 (B method), applying a load of 50 g, performing dry heat treatment in an oven at 177°C for two minutes, and measuring the cord length before and after heat treatment.

The number of layers in the belt reinforcement layer 16 in the shoulder regions R2 may be greater than the number of layers in the belt reinforcement layer 16 in the center region R1. In this case, the number of layers in the belt reinforcement layer 16 throughout the shoulder regions R2 can be greater than the number of layers in the belt reinforcement layer 16 in the center region R1, or the number of layers in the belt reinforcement layer 16 in a portion of the shoulder regions R2 can be greater than the number of layers in the belt reinforcement layer 16 in the center region R1.

The configuration for making the tensile elastic modulus E1 of the belt reinforcement layer 16 in the center region R1 smaller than the tensile elastic modulus E2 of the belt reinforcement layer 16 in the shoulder regions R2 is not limited to the examples described above. For example, the cord diameter, Young's modulus, and/or the material and the like may differ between the cords 16a of the belt reinforcement layer 16 in the center region R1 and the cords 16a of the belt reinforcement layer 16 in the shoulder regions R2 in order for the tensile elastic modulus E1 to be smaller than the tensile elastic modulus E2. In other words, the winding tension, number of cords implanted, thermal shrinkage, number of layers, cord diameter, Young's modulus, and/or material and the like may be adjusted in order for the tensile elastic modulus E1 of the belt reinforcement layer 16 in the center region R1 to be smaller than the tensile elastic modulus E2 of the belt reinforcement layer 16 in the shoulder regions R2. By adjusting these factors, it is fully possible to make the tensile elastic modulus throughout the center region R1 smaller than the tensile elastic modulus throughout the shoulder regions R2. The tire widthwise edges of the belt reinforcement layer 16 may therefore be on the tire widthwise inner side of the ground contact edges E.

As described above, by making the tensile elastic modulus E1 of the belt reinforcement layer 16 in the center region R1 smaller than the tensile elastic modulus E2 of the belt reinforcement layer 16 in the shoulder regions R2, the ground contact length of the center region R1 of the tire 1 during vehicle travel is increased, thereby improving the straight-line stability of the tire 1. Furthermore, the ground contact length of the shoulder regions R2 of the tire 1 during vehicle travel is shorter, and the shoulder portions protrude less at high speeds, thereby improving the high-speed durability of the tire 1.

The tire 1 includes an inner liner 17. The inner liner 17 is disposed to cover the inner wall surface of the tire 1. The inner liner 17 can be configured by a plurality of inner liner layers stacked in the tire radial direction at the tire equatorial plane CL. In the present embodiment, the inner liner 17 is, for example, configured by a butyl-based rubber having low air permeability. However, the inner liner 17 is not limited to butyl-based rubber and may be configured by other rubber compositions, resins, or elastomers.

In the above-described configuration of the tire 1, the carcass cords 14c, the belt cords 15c, and the cords 16a of the belt reinforcement layer 16a have been described as organic fiber cords coated with an adhesive composition containing polyphenols and aldehydes. However, the tire 1 is not limited to the above-described configuration, but may be configured to have the aforementioned organic fiber cord as any one or more of the cords of the tire members. For example, the tire 1 may be configured to have the organic fiber cords as the carcass cords 14c, the belt cords 15c, the cords 16a of the belt reinforcement layer 16a, and/or the cords of other tire members. Even in a case in which the above-described organic fiber cords are used as any of the tire members, the environmental impact of the tire 1 can be reduced, since the organic fiber cords do not contain resorcinol.

### (Adhesive Composition)

The adhesive composition that is used in the tire 1 is coated on the cords, such as the organic fiber cords, is described below. The adhesive composition includes polyphenols and aldehydes. In the tire 1, the adhesive composition that coats the cords used in the carcass 14, the belt 15, or the belt reinforcement layer 16 or the like is configured to include specific polyphenols and aldehydes, so that good adhesive properties can be achieved even when resorcinol is not used out of consideration for the impact on the environment.

### (Polyphenols)

The adhesive composition contains polyphenols as a resin component. The inclusion of polyphenols in the adhesive composition enhances the adhesive properties of the resin composition. Here, the polyphenols are watersoluble polyphenols and may be any polyphenols other than resorcinol. The number of aromatic rings or the number of hydroxyl groups in the polyphenols may be selected as necessary.

From the viewpoint of achieving better adhesive properties, the polyphenols preferably have two or more hydroxyl groups, more preferably three or more hydroxyl groups. By containing three or more hydroxyl groups, the polyphenols or polyphenol condensate is water soluble in an adhesive composition liquid that contains water. This enables the polyphenols to be distributed uniformly in the adhesive composition, thereby achieving better adhesive properties. Furthermore, in a case in which the polyphenols are polyphenols containing a plurality (two or more) of aromatic rings, each of those aromatic rings has two or three hydroxyl groups in the ortho, meta, or para positions.

Examples of the above-described polyphenols having three or more hydroxyl groups include the polyphenols listed below.
Phloroglucinol: 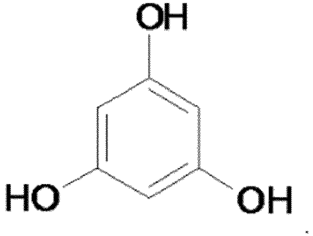
Morin(2',4',3,5,7-pentahydroxy flavone): 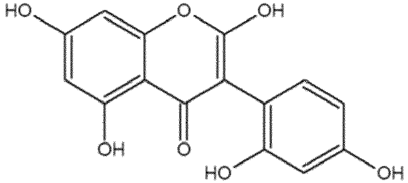
Phloroglucide(2,4,6,3,' 5 '-biphenylpentol):

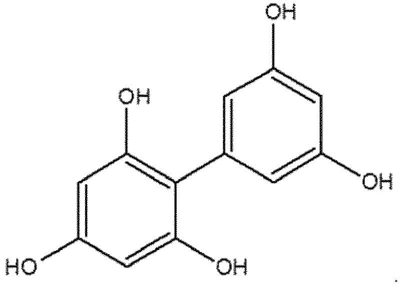

### (Aldehydes)

In addition to the above-described polyphenols, the adhesive composition includes aldehydes as resin components. The inclusion of aldehydes in the adhesive composition can achieve high adhesive properties together with the above-described polyphenols. Here, the aldehydes are not particularly limited and may be selected as necessary according to the required performance. The aldehydes also include aldehyde derivatives that are derived from aldehydes.

Aldehydes include, for example, monoaldehydes such as formaldehyde, acetaldehyde, butyraldehyde, acrolein, propionaldehyde, chloral, butyraldehyde, caproaldehyde, and allylaldehyde, or aliphatic dialdehydes such as glyoxal, malonaldehyde, succinaldehyde, glutaraldehyde, and adipoaldehyde, aldehydes with aromatic rings, dialdehyde starch, and the like. These aldehydes may be used alone, or a mixture of a plurality thereof may be used.

The aldehydes preferably contain aldehydes with aromatic rings. The reason is that better adhesive properties can be obtained. The aldehydes are preferably free of formaldehyde. Being free of formaldehyde refers, for example, to the mass content of formaldehyde based on the total mass of the aldehydes being less than 0.5 mass%.

Aldehydes that have aromatic rings are aromatic aldehydes that contain at least one aromatic ring and at least one aldehyde group in one molecule. Aromatic aldehydes can be used to form relatively inexpensive resins with low environmental impact and excellent mechanical strength, electrical insulation, acid resistance, water resistance, heat resistance, and the like.

From the viewpoint of achieving better adhesive properties, the aldehydes having aromatic rings preferably have two or more aldehyde groups. By cross-linking a plurality of aldehyde groups and condensing, the degree of cross-linking of the thermosetting resin can be increased, thereby further enhancing the adhesive properties. Furthermore, in a case in which the aldehydes have two or more aldehyde groups, two or more aldehyde groups are more preferably present in one aromatic ring. Each aldehyde group can be present in ortho, meta or para position in one aromatic ring.

Examples of such aldehydes include 1,2-benzenedicarboxaldehyde, 1,3-benzenedicarboxaldehyde, 1,4-benzenedicarboaldehyde 1,4-benzenedicarboaldehyde, 2-hydroxybenzene-1,3,5-tricarbaldehyde, or a mixture of these compounds.

Among these, at least 1,4-benzenedicarboaldehyde is preferably used as an aldehyde with aromatic rings from the viewpoint of achieving better adhesive properties.

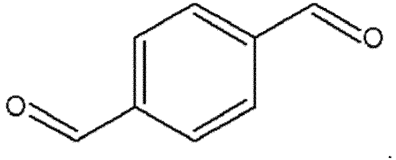

Aldehydes with aromatic rings include not only those with benzene rings but also heteroaromatic compounds. Aldehydes that are heteroaromatic compounds include, for example, aldehydes having a furan ring, such as those illustrated below. 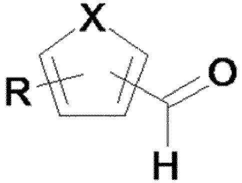 (where X includes O; and R represents -H or -CHO)

The aldehydes with furan rings mentioned above include, for example, the following compounds. 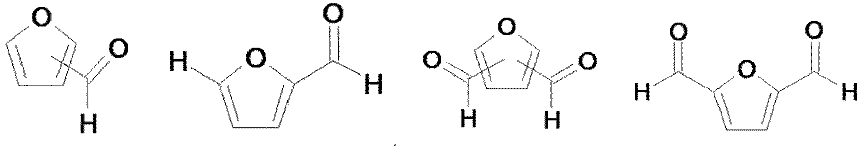 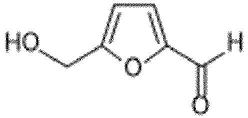 (where R represents -H or -CHO; and R, R2, and R3 each represent an alkyl, aryl, arylalkyl, alkylaryl, or cycloalkyl group)

In the adhesive composition, the polyphenols and aldehydes are preferably in a condensed state, and the mass ratio of the aldehydes having aromatic rings to the polyphenols (content of aldehydes having aromatic rings / content of polyphenols) is preferably 0.1 or more and 3 or less, more preferably 0.25 or more and 2.5 or less. This is because the hardness and adhesive properties of the resin, which is the product of the condensation reaction between the polyphenols and the aldehydes having aromatic rings, are more suitable.

The total content of polyphenols and aldehydes having aromatic rings in the adhesive composition is preferably 3 mass% to 30 mass%, more preferably 5 mass% to 25 mass%. This is because better adhesive properties can be secured without deteriorating workability and the like. The mass ratio and total content of polyphenols and aldehydes having aromatic rings are the mass (solid content ratio) of the dried product.

### (Isocyanate Compound)

In addition to the polyphenols and aldehydes described above, the adhesive composition preferably further contains an isocyanate compound. The synergistic effect between polyphenols and aldehydes can greatly enhance the adhesive properties of the adhesive composition.

Here, the isocyanate compound is a compound that promotes adhesion to the resin material (for example, phenol/aldehyde resin yielded by condensing polyphenols and aldehydes), i.e., the adherend of the adhesive composition, and has isocyanate groups as polar functional groups.

The isocyanate compound is not particularly limited but is preferably a (blocked) isocyanate group-containing aromatic compound from the viewpoint that adhesive properties can be further improved. By including the isocyanate compound in the adhesive composition, the (blocked) isocyanate group-containing aromatics are distributed at a position near the interface between the adherend fiber and the adhesive composition, and an adhesion promoting effect is obtained. This effect can further enhance the adhesion of the adhesive composition to the organic cords.

The (blocked) isocyanate group-containing aromatic compound is an aromatic compound that has a (blocked) isocyanate group. A "(blocked) isocyanate group" refers to a blocked isocyanate group or an isocyanate group, and in addition to isocyanate groups, this includes blocked isocyanate groups produced by reacting isocyanate groups with a blocking agent, isocyanate groups such that isocyanate groups are unreacted with blocking agents, isocyanate groups produced by dissociation of blocking agents from blocked isocyanate groups, and the like.

Furthermore, the (blocked) isocyanate group-containing aromatic compound preferably contains a molecular structure in which aromatics are bonded with an alkylene chain and more preferably contains a molecular structure in which aromatics are methylene bonded. A molecular structure in which aromatics are bonded with an alkylene chain can, for example, be found in diphenylmethane diisocyanate, polyphenylene polymethylene polyisocyanate, or condensation products of phenols and formaldehyde.

Examples of (blocked) isocyanate group-containing aromatic compounds include compounds containing aromatic polyisocyanate and thermally dissociable blocking agents, water-dispersible compounds containing a component of diphenylmethane diisocyanate or aromatic polyisocyanate blocked with a thermally dissociable blocking agent, aqueous urethane compounds, and the like.

Suitable examples of compounds containing aromatic polyisocyanate and a thermally dissociable blocking agent include blocked isocyanate compounds containing diphenylmethane diisocyanate and known isocyanate blocking agents. Examples of water-dispersible compounds containing a component of diphenylmethane diisocyanate or aromatic polyisocyanate blocked with a thermally dissociable blocking agent include reaction products of diphenylmethane diisocyanate or polymethylene polyphenyl polyisocyanate blocked with a known blocking agent that blocks isocyanate groups. Specifically, commercially available blocked polyisocyanate compounds such as ELASTRON BN69 (manufactured by DKS Co., Ltd.), ELASTRON BN77 (manufactured by DKS Co., Ltd.), or MEIKANATE TP-10 (manufactured by Meisei Chemical Works Co., Ltd.) can be used.

Aqueous urethane compounds can be obtained by reacting an organic polyisocyanate compound (α) containing a molecular structure in which aromatics are joined by an alkylene chain, preferably a molecular structure in which aromatics are methylene bonded, with a compound (β) having a plurality of active hydrogens and a blocking agent (γ) that is thermally dissociable with respect to isocyanate groups. An aqueous urethane compound (F) acts not only as an adhesion modifier by virtue of its flexible molecular structure but also as a flexible crosslinking agent that prevents the adhesive from flowing at high temperatures. "Aqueous" refers to being water soluble or water dispersible. "Water soluble" does not necessarily mean completely water soluble but also means partially water soluble or not undergoing phase separation in an aqueous solution of the adhesive composition.

Here, the aqueous urethane compounds represented by the following general formula (I), for example, are preferable as the aqueous urethane compound (F): 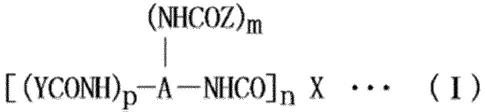 (where A represents the residual group after removal of the active hydrogen of an organic polyisocyanate compound (α) containing a molecular structure in which aromatics are linked by an alkylene chain, Y represents the residual group after removal of the active hydrogen of a blocking agent (γ) that is thermally dissociable with respect to isocyanate groups, Z represents the residual group after removal of the active hydrogen of a compound (δ), X represents the residual group after removal of the active hydrogen of a compound (β) having a plurality of active hydrogens, n is an integer from 2 to 4, and p + m is an integer from 2 to 4 (m ≥ 0.25))

Examples of organic polyisocyanate compounds (α) containing a molecular structure in which aromatics are linked by an alkylene chain include methylene diphenyl polyisocyanate and polymethylene polyphenyl polyisocyanate. Compounds (β) having a plurality of active hydrogens are preferably compounds having 2 to 4 active hydrogens and an average molecular weight of 5,000 or less. Examples of such compounds (β) include (i) polyhydric alcohols having 2 to 4 hydroxyl groups, (ii) polyvalent amines having 2 to 4 primary and/or secondary amino groups, (iii) amino alcohols having 2 to 4 primary and/or secondary amino groups and a hydroxyl group, (iv) polyester polyols having 2 to 4 hydroxyl groups, (v) polybutadiene polyols having 2 to 4 hydroxyl groups and copolymers of these with other vinyl monomers, (vi) polychloroprene polyols having 2 to 4 hydroxyl groups and copolymers of these with other vinyl monomers, and (vii) C2-C4 alkylene oxide polyadducts of polyhydric amines, polyhydric phenols, and aminoalcohols, C2-C4 alkylene oxide polyadducts of C3 or higher polyhydric alcohols, C2-C4 alkylene oxide copolymers, C3-C4 alkylene oxide polymers, and the like that are polyether polyols having 2 to 4 hydroxyl groups.

Blocking agents (γ) that are thermally dissociable with respect to isocyanate groups are compounds capable of releasing isocyanate groups by heat treatment. Examples include known isocyanate blocking agents.

The compound (δ) is a compound having at least one active hydrogen and an anionic and/or nonionic hydrophilic group. Examples of compounds having at least one active hydrogen and an anionic hydrophilic group include, for example, taurine, N-methyltaurine, N-butyltaurine, aminosulfonic acids such as sulfanilic acid, glycine, and aminocarboxylic acids such as alanine. On the other hand, examples of compounds having at least one active hydrogen and a nonionic hydrophilic group include compounds having a hydrophilic polyether chain.

Although the content of the isocyanate compound in the adhesive composition is not particularly limited, the content is preferably in a range of 5 mass% to 65 mass%, more preferably 10 mass% to 45 mass%, from the viewpoint of ensuring excellent adhesive properties more reliably. The content of the isocyanate compound is the mass (solid content ratio) of the dried product.

### (Rubber Latex)

In addition to the above-described polyphenols, aldehydes, and isocyanate compounds, the adhesive composition can substantially further contain rubber latex. This can further enhance the adhesive properties of the adhesive composition to rubber members.

The rubber latex is not particularly limited, and in addition to natural rubber (NR), examples thereof include synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). These rubber components may be used alone, or a plurality of types may be blended and used.

The rubber latex is preferably mixed with phenols and aldehydes prior to blending with isocyanate compounds. The total content of the rubber latex in the adhesive composition is preferably 20 mass% to 70 mass%, more preferably 25 mass% to 60 mass%.

The method of manufacturing the adhesive composition for organic fiber cords is not particularly limited, but examples thereof include mixing and aging raw materials such as polyphenols, aldehydes, and rubber latex, and mixing and aging polyphenols and aldehydes and then further adding rubber latex and aging. In a case in which isocyanate compounds are added to the raw materials, the method of manufacturing may be a method in which isocyanate compounds are added after rubber latex is added and aged. The composition and content of polycyclic aromatic hydrocarbons, aldehydes, rubber latex, and isocyanate compounds are the same as those described above in the adhesive compositions.

### (Organic Fiber Cord)

The tire 1 has an organic fiber cord coated with the adhesive composition. The organic fiber cord coated with the adhesive composition is bonded to a rubber member such as coating rubber to form a rubber-organic fiber cord composite. The resulting rubber-organic fiber cord composite has a low environmental impact by virtue of using the adhesive composition.

Here, in the tire, the rubber-organic fiber cord composite can, for example, be used as the carcass 14, the belt 15, the belt reinforcement layer 16, and the like. Among these, the rubber-organic fiber cord composite is preferably used in the carcass 14 and/or the belt reinforcement layer 16. This is because the reduction in the environmental impact of the organic fiber cord coated with the adhesive composition, the excellent adhesive properties between the organic fiber and the rubber member, and the like can be more effectively achieved.

In the rubber-organic fiber cord composite, it suffices for the adhesive composition to cover at least a portion of the organic fiber cord, but from the perspective of further improving the adhesive properties between the rubber and the organic fiber cord, the entire surface of the organic fiber cord is preferably coated with the adhesive composition.

The material of the organic fiber cord is not particularly limited and may be selected appropriately according to the application. As the material of the organic fiber cord, synthetic resin fiber material may be used, representative examples of which include polyester, aliphatic polyamide fiber cords such as 6-nylon, 6,6-nylon, or 4,6-nylon, polyketone fiber cords, or aromatic polyamide fiber cords such as para-phenylene terephthalamide.

The form of the organic fiber cord is not particularly limited, and monofilaments or an organic fiber cord formed by twisting together a plurality of monofilaments may be used. In this case, the average diameter of the monofilament is preferably 2 µm or more, more preferably 15 µm or more, from the viewpoint of providing sufficiently high reinforcement to rubber articles, and is preferably 50 µm or less. The organic fiber cord may be in the form of a screen.

From the viewpoint of achieving a high level of both low-speed and high-temperature steering stability and high-speed durability, the organic fiber cord may be a hybrid cord formed by twisting together filaments of two types of organic fibers.

Furthermore, from the viewpoint of further improving high-speed durability, the hybrid cord preferably has a thermal shrinkage stress (cN/dtex) at 177 °C of 0.20 cN/dtex or more, more preferably in the range of 0.25 cN/dtex to 0.40 cN/dtex.

Furthermore, from the viewpoint of further improving the low-speed and high-temperature steering stability, the hybrid cord preferably has a tensile elastic modulus under 1% strain at 25°C of 60 cN/dtex or less, particularly from 35 to 50 cN/dtex, and preferably has a tensile elastic modulus under 3% strain at 25°C of 30 cN/dtex or more, particularly from 45 to 70 cN/dtex.

The two types of organic fibers used in the hybrid cord are not particularly limited. Examples of organic fibers with high rigidity include rayon and lyocell, and examples of organic fibers with high thermal shrinkage include polyester, such as polyethylene terephthalate (PET), polyethylene naphthalate (PEN), polytrimethylene terephthalate (PTT), and the like, nylon, and polyketone (PK). More suitably, a combination of rayon or lyocell with nylon can be used as the two types of organic fibers used in the hybrid cord.

Examples of methods of adjusting the thermal shrinkage stress and tensile elastic modulus of the hybrid cords that use the above-described organic fibers include a method of controlling the tension during dip treatment. For example, the value of the thermal shrinkage stress of the cords can be increased by performing dip treatment while applying high tension. In other words, although each organic fiber has a unique range of values of physical properties, the dip treatment conditions can be controlled to adjust the values of the physical properties within that range so as to obtain a hybrid cord with the desired physical properties.

The organic fiber cord can, for example, be formed by monofilaments or twisted wires. In a case in which the organic fiber cord is a twisted wire, the organic fiber cord is preferably configured only by warp yarns, i.e., yarns that are substantially parallel to the extending direction of the cord. This configuration can suppress a reduction in the fatigue resistance due to the fiber friction that would occur between warp and weft yarns in a case in which organic fiber cord is configured by warp and weft yarns.

As described above, the tire 1 according to an embodiment of the invention includes a carcass 14 extending toroidally between a pair of bead portions 11, a belt layer 15a or 15b provided on the tire radial outer side of the crown portion of the carcass 14, and a belt reinforcement layer 16 provided on the tire radial outer side of the belt layer 15a or 15b. The tire 1 includes an organic fiber cord coated with an adhesive composition that includes polyphenols and aldehydes, and when a tire widthwise region centered on the tire equatorial plane CL and having a width in a tire width direction of 2/3 of the length between the ground contact edges E is a center region R1, and tire widthwise regions between the ground contact edges E and the tire widthwise outer sides of the center region R1 are shoulder regions R2, the tensile elastic modulus of the belt reinforcement layer 16 in the center region R1 is smaller than the tensile elastic modulus of the belt reinforcement layer 16 in the shoulder regions R2. According to the tire 1 having such a configuration, the adhesive composition does not contain resorcinol and formalin, thereby reducing the environmental impact, and improves tire performance such as high-speed durability and straight-line stability.

In the tire 1 according to an embodiment of the invention, the winding tension of the belt reinforcement layer 16 in the center region R1 is preferably smaller than the winding tension of the belt reinforcement layer 16 in the shoulder regions R2. According to such a configuration, tire performance such as high-speed durability and straight-line stability of the tire 1 can be easily improved.

In the tire 1 according to an embodiment of the invention, the number of cords 16a implanted in the belt reinforcement layer 16 in the center region R1 is preferably smaller than the number of cords 16a implanted in the belt reinforcement layer 16 in the shoulder regions R2. According to such a configuration, tire performance such as high-speed durability and straight-line stability of the tire 1 can be easily improved.

In the tire 1 according to an embodiment of the invention, the thermal shrinkage of the cords 16a in the belt reinforcement layer 16 in the center region R1 is preferably smaller than the thermal shrinkage of the cords 16a in the belt reinforcement layer 16 in the shoulder regions R2. According to such a configuration, tire performance such as high-speed durability and straight-line stability of the tire 1 can be easily improved.

In the tire 1 according to an embodiment of the invention, the belt reinforcement layer 16 preferably includes the organic fiber cord. According to such a configuration, the environmental impact of the tire 1 can be easily reduced.

In the tire 1 according to an embodiment of the invention, the polyphenols preferably include three or more hydroxyl groups. According to such a configuration, the adhesive properties of the adhesive composition included in the tire 1 can be improved.

In the tire 1 according to an embodiment of the invention, the aldehydes are preferably aldehydes that include an aromatic ring. According to such a configuration, the adhesive properties of the adhesive composition included in the tire 1 can be improved.

In the tire 1 according to an embodiment of the invention, the aldehydes preferably include two or more aldehyde groups. According to such a configuration, the adhesive properties of the adhesive composition included in the tire 1 can be improved.

In the tire 1 according to an embodiment of the invention, the total content of the polyphenols and the aldehydes is preferably 3 mass% to 30 mass%. According to such a configuration, the adhesive properties of the adhesive composition included in the tire 1 can be improved.

In the tire 1 according to an embodiment of the invention, the adhesive composition preferably includes an isocyanate compound. According to such a configuration, the adhesive properties of the adhesive composition included in the tire 1 can be improved.

In the tire 1 according to an embodiment of the invention, the isocyanate compound is preferably a (blocked) isocyanate group-containing aromatic compound. According to such a configuration, the adhesive properties of the adhesive composition included in the tire 1 can be improved.

In the tire 1 according to an embodiment of the invention, the adhesive composition preferably includes rubber latex. According to such a configuration, the adhesive properties of the rubber member of the adhesive composition included in the tire 1 can be improved.

In the tire 1 according to an embodiment of the invention, the rubber latex is preferably at least one selected from the group consisting of natural rubber (NR), polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). According to such a configuration, the adhesive properties of the rubber member of the adhesive composition included in the tire 1 can be improved.

Although the present disclosure is based on drawings and embodiments, it is to be noted that various changes and modifications could be made by those skilled in the art based on the present disclosure. Therefore, such changes and modifications are to be understood as included within the scope of the present disclosure. For example, the configurations, functions, and the like included in each embodiment or example may be reordered in any logically consistent way. Furthermore, the configurations, functions, and the like included in each embodiment can be used in combination with other embodiments or other examples. A plurality of configurations, functions, or the like can also be combined into one or divided, or a portion thereof can be omitted.

For example, the vehicle has been described as being an automobile in the present description. In addition to automobiles such as passenger vehicles, trucks, buses, and motorcycles, the vehicle may be any vehicle capable of movement with the tire 1, such as tractors and other agricultural vehicles, dump trucks and other construction or building vehicles, bicycles, and wheelchairs.

For example, the tire 1 has been described as being filled with air in the present description. The tire 1 can, for example, be filled with a gas such as nitrogen. The tire 1 is not limited to being filled with gas and may be filled with any fluid, including a liquid, a gel-like substance, or a granular material.

In the present description, the tire 1 has been described as being a tubeless tire provided with the inner liner 17. However, the tire 1 may, for example, be a tube-type tire provided with a tube.

For example, although the method of vulcanizing the tire 1 is not disclosed in the present description, the tire 1 may be produced by vulcanizing an unvulcanized tire by filling a vulcanizing bladder with a high temperature and pressure medium, such as steam, or may be produced by vulcanizing an unvulcanized tire by heating a vulcanizing medium in a vulcanizing bladder with an electric heater.

### REFERENCE SIGNS LIST

- 1: Tire
- 11: Bead portion
- 11a: Bead core
- 11b: Bead filler
- 11c: Bead wire
- 12: Sidewall portion
- 13: Tread portion
- 14: Carcass
- 14a: Carcass body portion
- 14b: Carcass folded-up portion
- 14c: Carcass cord
- 14r: Coating rubber
- 15: Belt
- 15a, 15b: Belt layer
- 15c: Belt cord
- 15r: Coating rubber
- 16: Belt reinforcement layer
- 16a: Cord
- 16r: Coating rubber
- 17: Inner liner
- CL: Tire equatorial plane
- E: Ground contact edge
- R1: Center region
- R2: Shoulder region

## Claims

1. A tire (1) comprising:
a carcass (14) extending toroidally between a pair of bead portions (11);
a belt layer (15a, 15b) provided on a tire radial outer side of a crown portion of the carcass (14); and
a belt reinforcement layer (16) provided on the tire radial outer side of the belt layer (15a, 15b), wherein
the tire (1) comprises an organic fiber cord coated with an adhesive composition that includes polyphenols and aldehydes,
when a tire widthwise region centered on a tire equatorial plane (CL) and having a width in a tire width direction of 2/3 of the length between ground contact edges (E) is a center region (R1), and tire widthwise regions between the ground contact edges (E) and tire widthwise outer sides of the center region are shoulder regions (R2),
a first tensile elastic modulus (E1) of the belt reinforcement layer in the center region is smaller than a second tensile elastic modulus (E2) of the belt reinforcement layer in the shoulder regions, and
a ratio of the first tensile elastic modulus (E1) to the second tensile elastic modulus (E2) is between 1/1.5 and 1/5.0.

2. The tire (1) according to claim 1, wherein a winding tension of the belt reinforcement layer (16) in the center region (R1) is smaller than the winding tension of the belt reinforcement layer (16) in the shoulder regions (R2).

3. The tire (1) according to claim 1 or 2, wherein the number of cords (16a) implanted in the belt reinforcement layer (16) in the center region (R1) is smaller than the number of cords (16a) implanted in the belt reinforcement layer (16) in the shoulder regions (R2).

4. The tire (1) according to any one of claims 1 to 3, wherein a thermal shrinkage of cords (16a) in the belt reinforcement layer (16) in the center region (R1) is smaller than the thermal shrinkage of cords (16a) in the belt reinforcement layer (16) in the shoulder regions (R2).

5. The tire (1) according to any one of claims 1 to 4, wherein the belt reinforcement layer (16) includes the organic fiber cord.

6. The tire (1) according to any one of claims 1 to 5, wherein the polyphenols include three or more hydroxyl groups.

7. The tire (1) according to any one of claims 1 to 6, wherein the aldehydes are aldehydes that include an aromatic ring.

8. The tire (1) according to claim 7, wherein the aldehydes include two or more aldehyde groups.

9. The tire (1) according to any one of claims 1 to 8, wherein a total content of the polyphenols and the aldehydes is 3 mass% to 30 mass%.

10. The tire (1) according to any one of claims 1 to 9, wherein the adhesive composition includes an isocyanate compound.

11. The tire (1) according to claim 10, wherein the isocyanate compound is a (blocked) isocyanate group-containing aromatic compound.

12. The tire (1) according to any one of claims 1 to 11, wherein the adhesive composition includes rubber latex.

13. The tire (1) according to claim 12, wherein the rubber latex is at least one selected from the group consisting of natural rubber (NR), polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp).

## Patentansprüche

1. Reifen (1), der Folgendes umfasst:
eine Karkasse (14), die sich kreisringförmig zwischen einem Paar von Wulstabschnitten (11) erstreckt;
eine Gürtellage (15a, 15b), die auf einer Reifenradialaußenseite eines Scheitelabschnitts der Karkasse (14) bereitgestellt ist; und
eine Gürtelverstärkungslage (16), die auf der Reifenradialaußenseite der Gürtellage (15a, 15b) bereitgestellt ist, wobei
der Reifen (1) einen organischen Faserkord umfasst, der mit einer Klebstoffzusammensetzung überzogen ist, die Polyphenole und Aldehyde einschließt,
wenn ein Reifenbreitenrichtungsbereich, der auf einer Reifenäquatorialebene (CL) zentriert ist und eine Breite in einer Reifenbreitenrichtung von 2/3 der Länge zwischen Bodenberührungskanten (E) aufweist, ein Mittelbereich (R1) ist, und Reifenbreitenrichtungsbereiche zwischen den Bodenberührungskanten (E) und Reifenbreitenrichtungsaußenseiten des Mittelbereichs Schulterbereiche (R2) sind,
ein erster Zug-Elastizitätsmodul (E1) der Gürtelverstärkungslage in dem Mittelbereich kleiner ist als ein zweiter Zug-Elastizitätsmodul (E2) der Gürtelverstärkungslage in den Schulterbereichen, und
ein Verhältnis des ersten Zug-Elastizitätsmoduls (E1) zu dem zweiten Zug-Elastizitätsmodul (E2) zwischen 1/1,5 und 1/5,0 beträgt.

2. Reifen (1) nach Anspruch 1, wobei eine Wickelspannung der Gürtelverstärkungslage (16) in dem Mittelbereich (R1) kleiner ist als die Wickelspannung der Gürtelverstärkungslage (16) in den Schulterbereichen (R2).

3. Reifen (1) nach Anspruch 1 oder 2, wobei die Anzahl von Kords (16a), die in der Gürtelverstärkungslage (16) in dem Mittelbereich (R1) eingesetzt sind, kleiner ist als die Anzahl von Kords (16a), die in der Gürtelverstärkungslage (16) in den Schulterbereichen (R2) eingesetzt sind.

4. Reifen (1) nach einem der Ansprüche 1 bis 3, wobei eine Wärmeschrumpfung von Kords (16a) in der Gürtelverstärkungslage (16) in dem Mittelbereich (R1) kleiner ist als die Wärmeschrumpfung von Kords (16a) in der Gürtelverstärkungslage (16) in den Schulterbereichen (R2).

5. Reifen (1) nach einem der Ansprüche 1 bis 4, wobei die Gürtelverstärkungslage (16) den organischen Faserkord einschließt.

6. Reifen (1) nach einem der Ansprüche 1 bis 5, wobei die Polyphenole drei oder mehr Hydroxylgruppen einschließen.

7. Reifen (1) nach einem der Ansprüche 1 bis 6, wobei die Aldehyde Aldehyde sind, die einen aromatischen Ring einschließen.

8. Reifen (1) nach Anspruch 7, wobei die Aldehyde zwei oder mehr Aldehydgruppen einschließen.

9. Reifen (1) nach einem der Ansprüche 1 bis 8, wobei ein Gesamtgehalt der Polyphenole und der Aldehyde 3 Masse-% bis 30 Masse-% beträgt.

10. Reifen (1) nach einem der Ansprüche 1 bis 9, wobei die Klebstoffzusammensetzung eine Isocyanatverbindung einschließt.

11. Reifen (1) nach Anspruch 10, wobei die Isocyanatverbindung eine aromatische Verbindung ist, die eine (blockierte) Isocyanatgruppe enthält.

12. Reifen (1) nach einem der Ansprüche 1 bis 11, wobei die Klebstoffzusammensetzung Kautschukmilch einschließt.

13. Reifen (1) nach Anspruch 12, wobei die Kautschukmilch mindestens einer ist, der ausgewählt ist aus der Gruppe, die aus Naturkautschuk (NR), Polyisoprenkautschuk (IR), Styrol-Butadien-Copolymer-Kautschuk (SBR), Polybutadienkautschuk (BR), Ethylen-Propylen-Dien-Kautschuk (EPDM), Chloroprenkautschuk (CR), halogeniertem Butylkautschuk, Acrylnitril-Butadien-Kautschuk (NBR) und Vinylpyridin-Styrol-Butadien-Copolymer-Kautschuk (Vp) besteht.

## Revendications

1. Pneu (1) comprenant :
une carcasse (14) s'étendant de façon toroïdale entre une paire de parties de talon (11) ;
une couche de ceinture (15a, 15b) fournie sur un côté extérieur radial du pneu d'une partie de sommet de la carcasse (14) ; et
une couche de renfort de ceinture (16) fournie sur le côté extérieur radial du pneu de la couche de ceinture (15a, 15b), dans lequel
le pneu (1) comprend un câblé de fibre organique revêtu d'une composition adhésive qui inclut des polyphénols et des aldéhydes,
lorsqu'une région du pneu en largeur centrée sur un plan équatorial du pneu (CL) et ayant une largeur dans le sens de la largeur du pneu correspondant à 2/3 de la longueur entre des bords de contact avec le sol (E) est une région centrale (R1), et des régions en largeur du pneu entre les bords de contact avec le sol (E) et des côtés extérieurs en largeur du pneu de la région centrale sont des régions d'épaulement (R2),
un premier module élastique de traction (E1) de la couche de renfort de ceinture dans la région centrale est inférieur à un deuxième module élastique de traction (E2) de la couche de renfort de ceinture dans les régions d'épaulement, et
un rapport du premier module élastique de traction (E1) au deuxième module élastique de traction (E2) est entre 1/1,5 et 1/5,0.

2. Pneu (1) selon la revendication 1, dans lequel une tension d'enroulement de la couche de renfort de ceinture (16) dans la région centrale (R1) est inférieure à la tension d'enroulement de la couche de renfort de ceinture (16) dans les régions d'épaulement (R2).

3. Pneu (1) selon la revendication 1 ou 2, dans lequel le nombre de câblés (16a) implantés dans la couche de renfort de ceinture (16) dans la région centrale (R1) est inférieur au nombre de câblés (16a) implantés dans la couche de renfort de ceinture (16) dans les régions d'épaulement (R2).

4. Pneu (1) selon l'une quelconque des revendications 1 à 3, dans lequel une contraction par refroidissement de câblés (16a) dans la couche de renfort de ceinture (16) dans la région centrale (R1) est inférieur à la contraction par refroidissement de câblés (16a) dans la couche de renfort de ceinture (16) dans les régions d'épaulement (R2).

5. Pneu (1) selon l'une quelconque des revendications 1 à 4, dans lequel la couche de renfort de ceinture (16) inclut le câblé de fibre organique.

6. Pneu (1) selon l'une quelconque des revendications 1 à 5, dans lequel les polyphénols incluent trois groupes hydroxyle ou plus.

7. Pneu (1) selon l'une quelconque des revendications 1 à 6, dans lequel les aldéhydes sont des aldéhydes qui incluent un cycle aromatique.

8. Pneu (1) selon la revendication 7, dans lequel les aldéhydes incluent deux groupes aldéhyde ou plus.

9. Pneu (1) selon l'une quelconque des revendications 1 à 8, dans lequel une teneur totale des polyphénols et des aldéhydes est de 3 % en masse à 30 % en masse.

10. Pneu (1) selon l'une quelconque des revendications 1 à 9, dans lequel la composition adhésive inclut un composé isocyanate.

11. Pneu (1) selon la revendication 10, dans lequel le composé isocyanate est un composé aromatique contenant un groupe isocyanate (bloqué).

12. Pneu (1) selon l'une quelconque des revendications 1 à 11, dans lequel la composition adhésive inclut un latex d'élastomère-caoutchouc.

13. Pneu (1) selon la revendication 12, dans lequel le latex d'élastomère-caoutchouc est au moins un caoutchouc sélectionné parmi le groupe constitué d'un caoutchouc naturel (NR), d'un caoutchouc de polyisoprène (IR), d'un caoutchouc de copolymère styrène-butadiène (SBR), d'un caoutchouc de polybutadiène (BR), d'un caoutchouc d'éthylène-propylène-diène (EPDM), d'un caoutchouc de chloroprène (CR), d'un caoutchouc de butyle halogéné, d'un caoutchouc d'acrylonitrile-butadiène (NBR) et d'un caoutchouc de copolymère vinylpyridine-styrène-butadiène (Vp).
